# EUROPEAN PATENT APPLICATION

(11) **EP 4 300 921 A1**
(43) Date of publication of application: **03.01.2024**
(21) Application number: 22758958.7
(22) Date of filing: 25.02.2022
(51) Int. Cl.: H04L 67/60, G06F 9/50

(54) **NATIVE COMPUTING POWER SERVICE IMPLEMENTATION METHOD AND APPARATUS, NETWORK DEVICE, AND TERMINAL**

(30) Priority: 26.02.2021 CN 202110217666
(71) Applicant: Vivo Mobile Communication Co., Ltd., Dongguan, Guangdong 523863 (CN)
(72) Inventor: KANG, Yanchao, Dongguan, Guangdong 523863 (CN); QIN, Fei, Dongguan, Guangdong 523863 (CN)
(74) Representative: Murgitroyd & Company
(86) International application number: PCT/CN2022/077841
(87) International publication number: WO 2022/179594

(57) **Abstract**

This application relates to the field of mobile communications, and discloses a native computing power service implementation method and apparatus, a network device, and a terminal. The method includes: performing signaling communication of a native computing power service with a terminal through a control plane, and providing the terminal with a native computing power service that meets a computing power resource requirement of the terminal.

## Description

### CROSS-REFERENCE TO RELATED APPLICATION

This application claims priority to Chinese Patent Application No. 202110217666.2, entitled "NATIVE COMPUTING POWER SERVICE IMPLEMENTATION METHOD AND APPARATUS, NETWORK DEVICE, AND TERMINAL" and filed with the China National Intellectual Property Administration on February 26, 2021, which is incorporated herein by reference in its entirety.

### TECHNICAL FIELD

This application relates to the field of mobile communication technologies, and specifically, to a native computing power service implementation method and apparatus, a network device, and a terminal.

### BACKGROUND

In a 5G system, a computing power service is an application-layer service. The optimization of a network for the computing power service is to support edge computing, and the edge computing enables an operator to select, for a terminal (User Equipment, UE), a third-party service provider closer to an access point of the UE to provide a service.

Since it is necessary to introduce the third party, the operator cannot effectively monitor the computing power service.

### SUMMARY

Embodiments of this application aim to provide a native computing power service implementation method and apparatus, a network device, and a terminal, to resolve a problem that an operator cannot effectively monitor a native computing power service.

According to a first aspect, a native computing power service implementation method is provided, and is performed by a target network device, the method including: performing signaling communication of a native computing power service with a terminal through a control plane, and providing the terminal with a native computing power service that meets a computing power resource requirement of the terminal.

According to a second aspect, a native computing power service implementation apparatus is provided, the apparatus including: a communication module, configured to perform signaling communication of a native computing power service with a terminal through a control plane; and a service providing module, configured to provide the terminal with a native computing power service that meets a computing power resource requirement of the terminal.

According to a third aspect, a native computing power service implementation method is provided, and is performed by a terminal, the method including: performing signaling communication of a native computing power service with a target network device through a control plane, to obtain a native computing power service that meets a computing power resource requirement.

According to a fourth aspect, a native computing power service implementation apparatus is provided, the apparatus including: a transceiver module, configured to perform signaling communication of a native computing power service with a target network device through a control plane; and a service execution module, configured to obtain a native computing power service that meets a computing power resource requirement.

According to a fifth aspect, a network device is provided, the network device including a processor, a memory, and a program or an instruction stored in the memory and executable on the processor, the program or the instruction, when executed by the processor, implementing steps of the method according to the first aspect.

According to a sixth aspect, a terminal is provided, the terminal including a processor, a memory, and a program or an instruction stored in the memory and executable on the processor, the program or the instruction, when executed by the processor, implementing steps of the method according to the third aspect.

According to a seventh aspect, a readable storage medium is provided, storing a program or an instruction, the program or instruction, when executed by a processor, implementing steps of the method according to the first aspect, or implementing steps of the method according to the third aspect.

According to an eighth aspect, a chip is provided, including: a processor and a communication interface, where the communication interface is coupled to the processor, and the processor is configured to run a program or instruction of a network device, to implement the method according to the first aspect, or implement the method according to the third aspect.

In embodiments of this application, signaling communication of a native computing power service is performed with a terminal through a control plane, and the terminal is provided with a native computing power service that meets a computing power resource requirement of the terminal. Through embodiments of this application, an operator can implement and monitor a native computing power service, and both a communication requirement and a computing power requirement of a UE are satisfied.

### BRIEF DESCRIPTION OF THE DRAWINGS

FIG. 1 is a structural diagram of a wireless communication system to which embodiments of this application can be applied;
FIG. 2 is a schematic flowchart of a native computing power service implementation method according to embodiments of this application;
FIG. 3 is a schematic diagram of a signaling communication method for implementing a native computing power service according to embodiments of this application;
FIG. 4 is a schematic diagram of signaling communication of a native computing power service implementation method according to embodiments of this application;
FIG. 5 is another schematic flowchart of a native computing power service implementation method according to embodiments of this application;
FIG. 6 is a schematic diagram of a registration procedure of a native computing power service according to embodiments of this application;
FIG. 7 is another schematic flowchart of a native computing power service implementation method according to embodiments of this application;
FIG. 8 is a schematic diagram of a policy negotiation procedure of a native computing power service according to embodiments of this application;
FIG. 9 is a schematic diagram of a network architecture of a native computing power service according to embodiments of this application;
FIG. 10 is a schematic diagram of a structure of a native computing power service implementation apparatus according to embodiments of this application;
FIG. 11 is another schematic flowchart of a native computing power service implementation method according to embodiments of this application;
FIG. 12 is another schematic flowchart of a native computing power service implementation method according to embodiments of this application;
FIG. 13 is another schematic flowchart of a native computing power service implementation method according to embodiments of this application;
FIG. 14 is a schematic diagram of another structure of a native computing power service implementation apparatus according to embodiments of this application;
FIG. 15 is a schematic diagram of a structure of a communication device according to embodiments of this application;
FIG. 16 is a schematic diagram of a structure of a network device for implementing embodiments of this application; and
FIG. 17 is a schematic diagram of a hardware structure of a terminal for implementing embodiments of this application.

### DETAILED DESCRIPTION

The technical solutions in embodiments of this application are clearly and completely described below with reference to the accompanying drawings in embodiments of this application. Apparently, the described embodiments are merely some embodiments of this application rather than all of the embodiments. All other embodiments obtained by a person of ordinary skill in the art based on embodiments of this application without creative efforts shall fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that embodiments of this application can be implemented in other orders than the order illustrated or described herein. Objects distinguished by "first", "second", and the like are usually one type, and the number of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in embodiments of this application are not limited to a long term evolution (Long Term Evolution, LTE) system or an LTE-advanced (LTE-Advanced, LTE-A) system, and can also be used in other wireless communication systems, such as, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA) and other systems. The terms "system" and "network" in embodiments of this application are often used interchangeably, and the described technology can be used not only for the above systems and wireless technologies, but also for other systems and wireless technologies. However, the following description describes a new radio (New Radio, NR) system, that is, a 5G system, for an example objective, and NR terms are used in most of the description below, although these technologies are also applicable to applications other than NR system applications, such as an enhanced 5G system and a 6th generation (6th Generation, 6G) communication system.

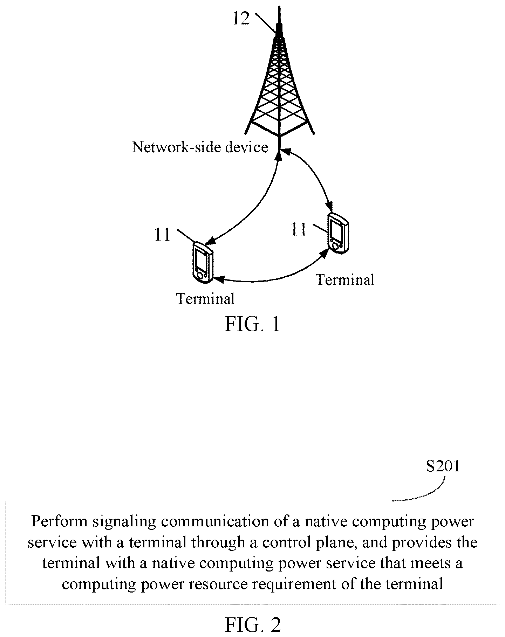

FIG. 1 is a structural diagram of a wireless communication system to which embodiments of this application can be applied. The wireless communication system includes a terminal 11 and a network device 12. The terminal 11 may also be referred to as a terminal device or a user equipment (User Equipment, UE). The terminal 11 may be a terminal-side device such as a mobile phone, a tablet personal computer (Tablet Personal Computer), a laptop computer (Laptop Computer) or called a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), an in-vehicle device (VLTE), or a pedestrian terminal (PUE). The wearable device includes: a bracelet, earphones, glasses, or the like. It should be noted that, a specific type of the terminal 11 is not limited in embodiments of this application. The network device 12 may be a base station or a core network device, where the base station may be referred to as a node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a wireless local area network (Wireless Local Area Network, WLAN) access point, a Wi-Fi node, a transmitting receiving point (Transmitting Receiving Point, TRP), or some other suitable term in the field, provided that the same technical effect is achieved. The base station is not limited to a particular technical term. It should be noted that in embodiments of this application, only a base station in an NR system is taken as an example, but the specific type of the base station is not limited.

A native computing power service implementation method according to embodiments of this application is described in detail below through specific embodiments and application scenarios thereof with reference to the accompanying drawings.

FIG. 2 is a schematic flowchart of a native computing power service implementation method according to embodiments of this application, and the method may be performed by a target network device. In other words, the method may be performed by software or hardware installed on a target network device. As shown in FIG. 2, the method may include the following steps.

Step S201: Perform signaling communication of a native computing power service with a terminal through a control plane, and provide the terminal with a native computing power service that meets a computing power resource requirement of the terminal.

To implement a native computing power service, embodiments of this application introduce a computing service layer (Computing Service layer, CS layer) and the target network device CSCF configured to implement a native computing power service.

It should be understood that in this specification, a computing power service is equivalent to a computing service and computing is equivalent to computing power.

The target network device is a computing service control function entity (Computing Service Control Function, CSCF). The computing service control function entity is a function entity introduced in embodiments of this application and dedicated to implementing a native computing power service, or another function entity that can implement a native computing power service. For simplicity, the CSCF is used as an example for description in the following embodiments.

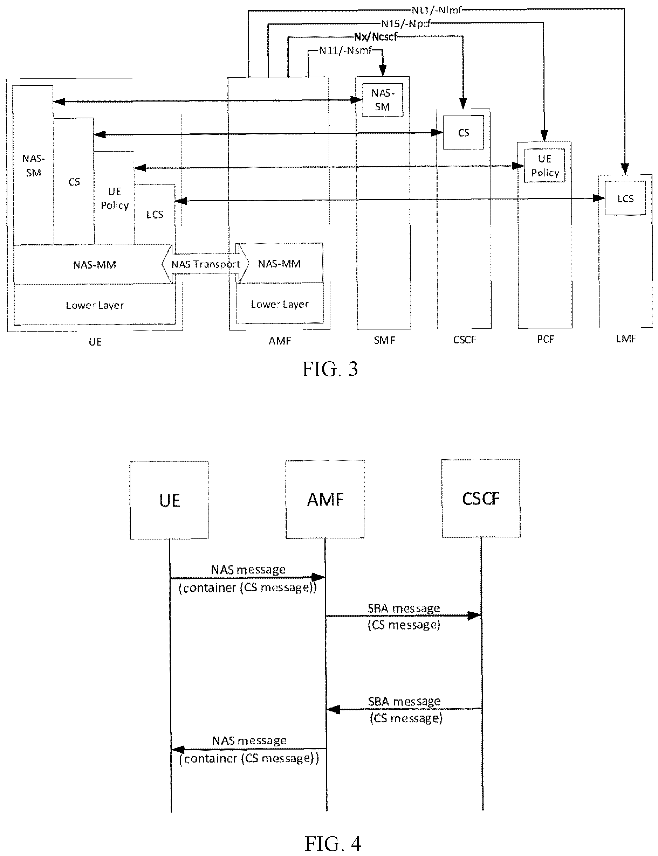

As shown in FIG. 3, a target network device performs signaling communication of a native computing power service with a terminal through a computing service layer, where the computing service layer of the terminal is an upper layer of a non-access stratum, and signaling of the native computing power service is encapsulated in signaling of the non-access stratum.

In a case of providing the terminal with the native computing power service that meets the computing power resource requirement of the terminal, the target network device implements at least one of the following functions:
authenticating and authorizing the terminal to access the native computing power service;
negotiating computing power quality of service of the native computing power service, to meet the computing power resource requirement of the terminal, such as computing power quality of service (Quality of Service, QoS);
scheduling of a computing power resource;
routing; and
charging, where the CSCF is responsible for collecting a charging data record (Charging data record, CDR).

The foregoing logical functions may all be implemented on the target network device, or may be respectively implemented by corresponding logical function entities.

The target network device performs signaling communication of a native computing power service with a terminal through a computing service layer, and a signaling message of the native computing power service can be implemented based on an IP protocol, an HTTP protocol, RESTful API, or other protocols.

Therefore, in a native computing power service implementation method provided in embodiments of this application, signaling communication of a native computing power service is performed with a terminal through a control plane, and the terminal is provided with a native computing power service that meets a computing power resource requirement of the terminal, so that an operator can implement and monitor a native computing power service, and both a communication requirement and a computing power requirement of a UE are satisfied.

FIG. 4 is another schematic flowchart of a native computing power service implementation method according to embodiments of this application, and the method may be performed by a target network device. In other words, the method may be performed by software or hardware installed on a target network device.

In an implementation, as shown in FIG. 4, signaling of the native computing power service between the target network device and the terminal in step S201 is forwarded by an execution entity configured to implement an access and mobility management function (Access and Mobility Management Function, AMP). A CS message is transparently transmitted between the terminal and the AMF through uplink and downlink NAS message (NAS message) transparent container.

The signaling of the native computing power service is transparently transmitted between the target network device and the execution entity configured to implement an access and mobility management function through a service message of a service based architecture (Service Based Architecture, SBA) interface. The CS message is transparently transmitted between the AMF and the CSCF through the service message of the SBA interface.

Therefore, in a native computing power service implementation method provided in embodiments of this application, signaling is transparently transmitted between a terminal and the CSCF through an execution entity configured to implement an access and mobility management function, so that an operator can implement and monitor a native computing power service of the terminal, and both a communication requirement and a computing power requirement of a UE are satisfied.

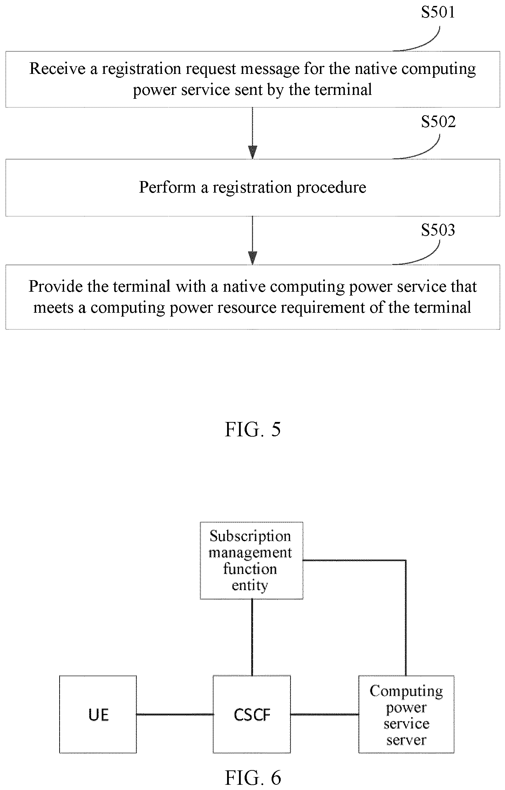

FIG. 5 is another schematic flowchart of a native computing power service implementation method according to embodiments of this application, and the method may be performed by a target network device. In other words, the method may be performed by software or hardware installed on a target network device. As shown in FIG. 5, the step S201 includes:
Step S501: Receive a registration request message for the native computing power service sent by the terminal.
Step S502: Perform a registration procedure.

In an implementation, as shown in FIG. 6, the registration procedure includes:

The CSCF obtains authentication information of the terminal from a subscription management function entity, and performs authentication;
in a case that the authentication is successful, the CSCF obtains user data of the terminal from the subscription management function entity; and
the CSCF notifies a computing power service server that third-party registration is performed.

The computing power service server may obtain user data from the subscription management function entity based on an actual requirement.

In an implementation, after performing third-party registration with a native computing power service server, the CSCF can receive a message for subscribing to a registration event notification from the terminal.

In an implementation, in a case that the terminal is roaming, the terminal receives a registration request message for the native computing power service sent by the terminal through a proxy target network device. The registration message between the terminal and the CSCF will be transferred through the proxy target network device (proxy-CSCF), and the CSCF receives a registration request message for the native computing power service sent by the terminal through a proxy target network device. The proxy-CSCF queries and obtains a home CSCF address through a DNS. Signaling of a native computing power service between the proxy target network device and the terminal is forwarded by an execution entity configured to implement an access and mobility management function.

Step S503: Provide the terminal with a native computing power service that meets a computing power resource requirement of the terminal.

Therefore, in a native computing power service implementation method provided in embodiments of this application, through a preset registration procedure, a terminal registers a native computing power service, so that the terminal can implement the native computing power service on an operator network.

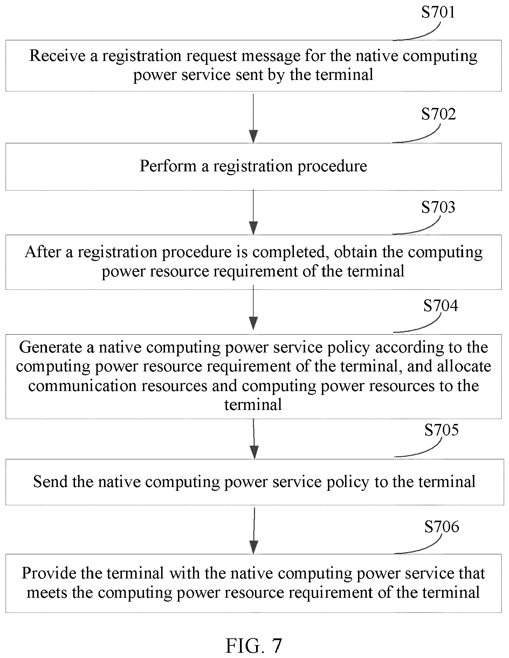

FIG. 7 is another schematic flowchart of a native computing power service implementation method according to embodiments of this application, and the method may be performed by a target network device. In other words, the method may be performed by software or hardware installed on a target network device. As shown in FIG. 7, the method may include the following steps.

Step S701: Receive a registration request message for the native computing power service sent by the terminal.

Step S702: Perform a registration procedure.

The steps S701 and S702 can implement the method embodiment of steps S501 and S502 in FIG. 5, and can achieve the same technical effect. To avoid repetition, details are not described herein again.

Step S703: After the registration procedure is completed, obtain a computing power resource requirement of the terminal.

After registering with the CSCF, the terminal will negotiate a required native computing power service policy with the CSCF based on the computing power resource requirement of the terminal.

Step S704: Generate a native computing power service policy based on the computing power resource requirement of the terminal, and allocate communication resources and computing power resources to the terminal.

In an implementation, the CSCF may directly generate a native computing power service policy based on the computing power resource requirement of the terminal and allocate communication resources and computing power resources to the terminal. In another implementation, the CSCF generates a native computing power service policy based on the computing power resource requirement of the terminal through a policy control function entity (Policy Control Function, PCF) and allocates communication resources and computing power resources to the terminal.

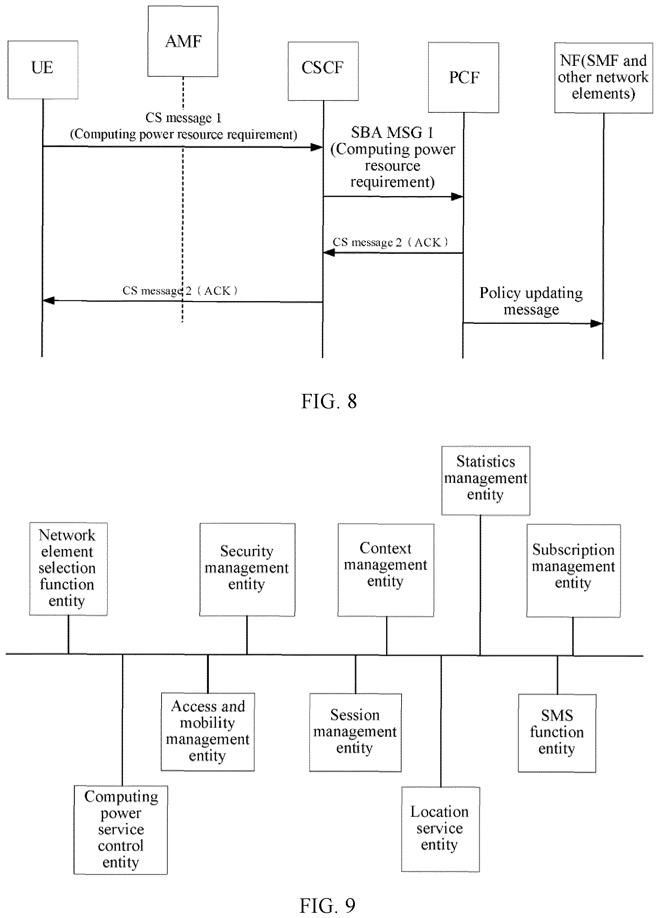

To generate a native computing power service policy, the CSCF or PCF needs to first collect related information of each layer to make intelligent summary and decision. As shown in FIG. 8, the PCF first obtains a computing power resource requirement of a UE and related information of other layers and then obtains the native computing power service policy after making summary and decision.

In an implementation, first information is obtained through an execution entity of a target network function.

It should be understood that the execution entity of the target network function is a network data analytics function (Network Data Analytics Function, NWDAF) entity, or another function entity configured to perform information collection and analysis or network status collection and analysis, such as an execution entity on an artificial intelligence (Artificial Intelligence, AI) plane, that is, to collect the first information from each layer through the artificial intelligence plane. For simplicity, the execution entity on the artificial intelligence plane is used as an example for description in the following embodiments.

A native computing power service policy is generated based on the first information and the computing power resource requirement of the terminal, where
the first information includes second information obtained from a transmission layer and third information obtained from a native computing power layer, where
the second information includes at least one of the following: transmission status information on a network side, and location information and a movement track of the terminal; and
the third information includes at least one of the following: computing power resource distribution information of a computing power service server in a network.

The artificial intelligence plane transmits the first information obtained from the above two layers to the native computing power layer, and the CSCF selects a computing power service server meeting the computing power resource requirement of the terminal and having a lowest probability of congestion on a transmission path and a matching gateway based on the movement track of the terminal and the computing power QoS requirement of the terminal, to form the native computing power service policy.

The native computing power service policy includes: information such as an address or an identifier of a computing power service server, a gateway address or a gateway identifier, and transmission quality of service QoS.

The CSCF updates a native computing power service policy on a session management entity directly or through the PCF based on the formed computing power service policy, to enable the session management entity to trigger a session management procedure, switch a session to an appropriate control plane function, and adjust transmission quality of service of the terminal or the like. As shown in FIG. 8, after obtaining the native computing power service policy, the PCF sends a policy updating message to other network nodes.

Step S705: Send the native computing power service policy to the terminal.

Further, in a case that the terminal performs a native computing power service, it is necessary to monitor the current native computing power service, to determine whether a current control plane session meets the computing power resource requirement of the terminal. Details include:

Obtain first information through an execution entity of a target network function;
the execution entity of the target network function determines whether a control plane session meets the computing power resource requirement of the terminal based on the first information; and
in a case that the control plane session does not meet the native computing power resource requirement of the terminal, update the native computing power service policy, and adjust communication resources and computing power resources allocated to the terminal, including: updating a gateway, updating a service server, or updating transmission QoS.

The CSCF updates the native computing power service policy directly or through the PCF, and adjusts communication resources and computing power resources allocated to the terminal.

The CSCF updates a native computing power service policy on a session management entity directly or through the PCF, to enable the session management entity to trigger a session management procedure, switch a session to an appropriate control plane function, and adjust the transmission quality of service of the terminal or the like.

The CSCF sends a related message to the terminal, to enable the terminal to update the native computing power service policy.

Further, in a case that the terminal performs a native computing power service, the method further includes:
performing communication with a computing power service server, to collect charging information related to the native computing power service; and
sending the charging information related to the native computing power service of the terminal to a charging entity, to enable the charging entity to obtain, according to the charging information related to the native computing power service of the terminal and charging information generated by transmission, a charging data record list.
the charging information includes at least one of the following:
   a type of a computing service;
   a computing amount;
   a computing duration;
   an amount of computing power resources used; and
   a duration of using computing power resources.

Step S706: Provide the terminal with a native computing power service that meets a computing power resource requirement of the terminal.

A network architecture of embodiments of this application is shown in FIG. 9, and network function entities communicate with each other through the SBA interface, where the CSCF exchanges information with the following core network functions: a subscription management entity (Unified Data Management, UDM), an access and mobility management entity AMF, a policy control function entity PCF, and a statistics management entity NWDAF.

Therefore, in a native computing power service implementation method provided in embodiments of this application, the CSCF negotiates required computing power resources with the terminal and allocates communication resources and computing power resources to the terminal, to provide the terminal with a native computing power service that meets a computing power resource requirement of the terminal.

It should be noted that in a native computing power service implementation method provided in embodiments of this application, an execution body may be a native computing power service implementation apparatus, or a control module configured to perform the native computing power service implementation method in the native computing power service implementation apparatus. In embodiments of this application, an example in which the native computing power service implementation apparatus performs the native computing power service implementation method is used to describe the native computing power service implementation apparatus provided in embodiments of this application.

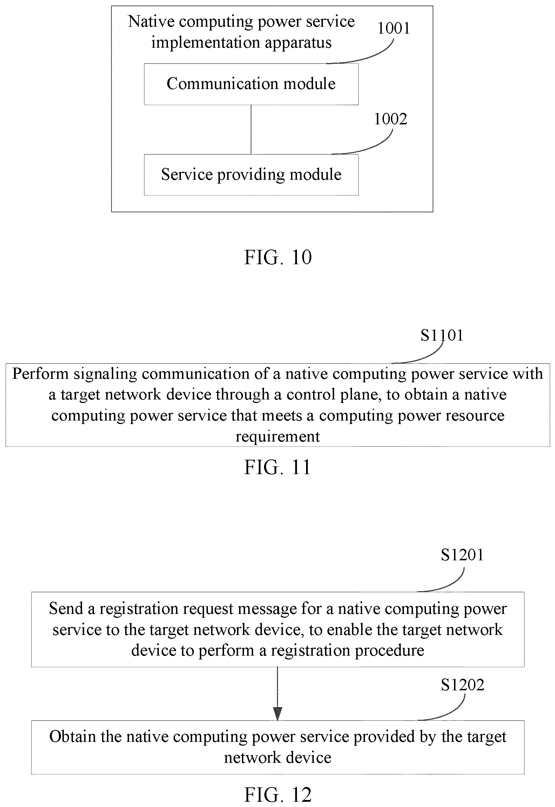

As shown in FIG. 10, the native computing power service implementation apparatus includes: a communication module 1001 and a service providing module 1002.

The communication module 1001 is configured to perform signaling communication of a native computing power service with a terminal through a control plane; and the service providing module 1002 is configured to provide the terminal with a native computing power service that meets a computing power resource requirement of the terminal.

Further, the communication module 1001 is configured to:
perform signaling communication of a native computing power service with a terminal through a computing service layer, where the computing service layer of the terminal is an upper layer of a non-access stratum, and signaling of the native computing power service is encapsulated in signaling of the non-access stratum.

Further, in a case of providing the terminal with a native computing power service that meets a computing power resource requirement of the terminal, the communication module 1001 is configured to implement at least one of the following functions on a network protocol transmission platform:
authenticating and authorizing the terminal to access the native computing power service;
negotiating computing power quality of service of the native computing power service;
scheduling of a computing power resource;
routing; and
charging.

Further, the target network device is a computing service control function entity CSCF.

Therefore, in a native computing power service implementation method provided in embodiments of this application, signaling communication of a native computing power service is performed with a terminal through a control plane, and the terminal is provided with a native computing power service that meets a computing power resource requirement of the terminal, so that an operator can implement and monitor a native computing power service, and both a communication requirement and a computing power requirement of a UE are satisfied.

Further, based on the foregoing embodiments, signaling of the native computing power service is forwarded by an execution entity configured to implement an access and mobility management function.

Further, the signaling of the native computing power service is transparently transmitted between the communication module 1001 and the execution entity configured to implement an access and mobility management function through a service message of a service based architecture interface.

Therefore, in a native computing power service implementation method provided in embodiments of this application, signaling is transparently transmitted between a terminal and the CSCF through an execution entity configured to implement an access and mobility management function, so that an operator can implement and monitor a native computing power service of the terminal, and both a communication requirement and a computing power requirement of a UE are satisfied.

Further, based on the foregoing embodiments, the communication module 1001 is configured to:
receive a registration request message for the native computing power service sent by the terminal; and
perform a registration procedure.

Further, the performing a registration procedure includes:
obtaining authentication information of the terminal from a subscription management function entity, and performing authentication;
in a case that the authentication is successful, obtaining user data of the terminal from the subscription management function entity; and
performing third-party registration with a computing power service server.

Further, after the performing third-party registration with a native computing power service server, the communication module 1001 further configured to:
receive a message for subscribing to a registration event notification from the terminal.

Further, in a case that the terminal is roaming, the communication module 1001 is configured to:
receive a registration request message for the native computing power service sent by the terminal through a proxy target network device, where signaling of a native computing power service between the proxy target network device and the terminal is forwarded by an execution entity configured to implement an access and mobility management function.

Therefore, in a native computing power service implementation method provided in embodiments of this application, through a preset registration procedure, a terminal registers a native computing power service, so that the terminal can implement the native computing power service on an operator network.

Further, based on the foregoing embodiments, the communication module 1001 is further configured to:
after the registration procedure is completed, obtain a computing power resource requirement of the terminal;
generate a native computing power service policy based on the computing power resource requirement of the terminal, and allocate communication resources and computing power resources to the terminal; and
send the native computing power service policy to the terminal.

Further, the communication module 1001 is configured to:
generate the native computing power service policy based on the computing power resource requirement of the terminal through a policy control function entity, and allocate the communication resources and the computing power resources to the terminal.

Further, the communication module 1001 is configured to:
obtain first information through an execution entity of a target network function; and
generate a native computing power service policy based on the first information and the computing power resource requirement of the terminal, where
the first information includes second information obtained from a transmission layer and third information obtained from a native computing power layer, where
the second information includes at least one of the following: transmission status information on a network side, and location information and a movement track of the terminal; and
the third information includes at least one of the following: computing power resource distribution information of a computing power service server in a network.

Further, the communication module 1001 is configured to:
select a computing power service server meeting the computing power resource requirement of the terminal and having a lowest probability of congestion on a transmission path and a matching gateway based on the movement track of the terminal.

Further, the communication module 1001 is configured to:
update a native computing power service policy on a session management entity, to enable the session management entity to trigger a session management procedure, switch a session to an appropriate control plane function, and adjust transmission quality of service of the terminal.

Further, in a case that the terminal performs a native computing power service, the communication module 1001 further configured to:
obtain first information through an execution entity of a target network function;
determine whether a control plane session meets the computing power resource requirement of the terminal based on the first information; and
in a case that the control plane session does not meet the native computing power resource requirement of the terminal, update the native computing power service policy, and adjust communication resources and computing power resources allocated to the terminal.

Further, the communication module 1001 is configured to:
update the native computing power service policy through a policy control function entity, and adjust communication resources and computing power resources allocated to the terminal.

Further, the execution entity of the target network function is a network data analytics function entity, or another function entity configured to perform information collection and analysis or network status collection and analysis.

Further, the native computing power service policy includes: an address or an identifier of a computing power service server, a gateway address or a gateway identifier, and transmission quality of service.

Further, in a case that the terminal performs a native computing power service, the communication module 1001 further configured to:
perform communication with a computing power service server, to collect charging information related to the native computing power service; and
send the charging information related to the native computing power service of the terminal to a charging entity, to enable the charging entity to obtain, according to the charging information related to the native computing power service of the terminal and charging information generated by transmission, a charging data record list.

Further, the charging information includes at least one of the following:
a type of a computing service;
a computing amount;
a computing duration;
an amount of computing power resources used; and
a duration of using computing power resources.

Therefore, in a native computing power service implementation method provided in embodiments of this application, the CSCF negotiates required computing power resources with the terminal and allocates communication resources and computing power resources to the terminal, to provide the terminal with a native computing power service that meets a computing power resource requirement of the terminal.

The native computing power service implementation apparatus in embodiments of this application may be an apparatus, or may be a component, an integrated circuit, or a chip in a terminal. The apparatus may be a mobile terminal or may be a non-mobile terminal. For example, the mobile terminal may include, but is not limited to, the types of the terminal 11 listed above, and the non-mobile terminal may be a server, a network attached storage (Network Attached Storage, NAS), a personal computer (personal computer, PC), a television (television, TV), a teller machine, or a self-service machine, which is not specifically limited in embodiments of this application.

The native computing power service implementation apparatus in embodiments of this application may be an apparatus having an operating system. The operating system may be Android (Android) operating system, an iOS operating system, or another possible operating system, which is not specifically limited in embodiments of this application.

The native computing power service implementation apparatus provided in embodiments of this application can implement all processes implemented in the method embodiments of FIG. 1 to FIG. 9, and achieve the same technical effect. To avoid repetition, details are not described herein again.

FIG. 11 is another schematic flowchart of a native computing power service implementation method according to embodiments of this application, and the method may be performed by a terminal. In other words, the method may be performed by software or hardware installed on a terminal. As shown in FIG. 11, the method may include the following steps.

Step S1101: Perform signaling communication of a native computing power service with a target network device through a control plane, to obtain a native computing power service that meets a computing power resource requirement.

Further, the target network device is a computing service control function entity.

In an implementation, the terminal performs signaling communication of a native computing power service with a target network device through a computing service layer, where the computing service layer of the terminal is an upper layer of a non-access stratum, and signaling of the native computing power service is encapsulated in signaling of the non-access stratum.

Further, signaling of the native computing power service between the target network device and the terminal is forwarded by an execution entity configured to implement an access and mobility management function.

The step S 1101 can implement the method embodiment of step S201 in FIG. 2, and can achieve the same technical effect. To avoid repetition, details are not described herein again.

Therefore, in a native computing power service implementation method provided in embodiments of this application, signaling communication of a native computing power service is performed with a terminal through a control plane, and the terminal is provided with a native computing power service that meets a computing power resource requirement of the terminal, so that an operator can implement and monitor a native computing power service, and both a communication requirement and a computing power requirement of a UE are satisfied.

FIG. 12 is another schematic flowchart of a native computing power service implementation method according to embodiments of this application, and the method may be performed by a terminal. In other words, the method may be performed by software or hardware installed on a terminal. As shown in FIG. 12, the method may include the following steps.

Step S1201: Send a registration request message for a native computing power service to a target network device, to enable the target network device to perform a registration procedure.

Further, the method further includes:
sending a message for subscribing to a registration event notification to the target network device.

Further, in a case that the terminal is roaming, the step S1101 includes:
sending a registration request message for a native computing power service to the target network device through a proxy target network device, where signaling of a native computing power service between the proxy target network device and the terminal is forwarded by an execution entity configured to implement an access and mobility management function.
step S1202: Obtain the native computing power service provided by the target network device.

The steps S1201 and 1202 can implement the method embodiment of steps S501 to 503 in FIG. 5, and can achieve the same technical effect. To avoid repetition, details are not described herein again.

Therefore, in a native computing power service implementation method provided in embodiments of this application, through a preset registration procedure, a terminal registers a native computing power service, so that the terminal can implement the native computing power service on an operator network.

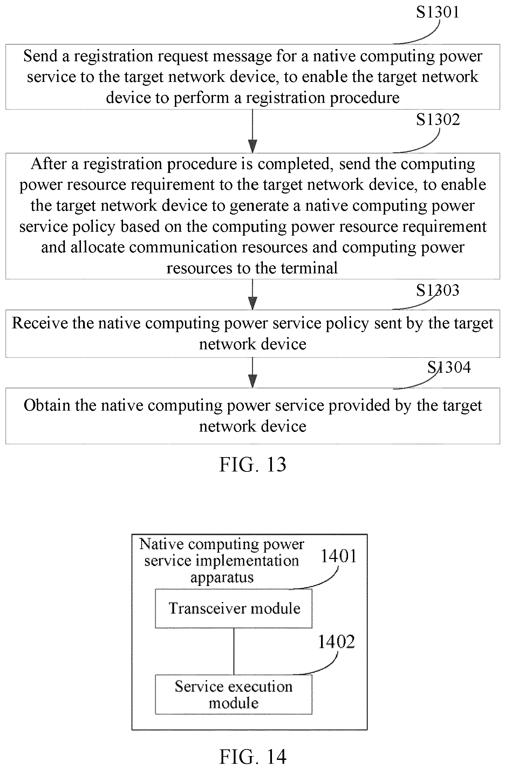

FIG. 13 is another schematic flowchart of a native computing power service implementation method according to embodiments of this application, and the method may be performed by a terminal. In other words, the method may be performed by software or hardware installed on a terminal. As shown in FIG. 13, the method may include the following steps.

Step S1301: Send a registration request message for a native computing power service to a target network device, to enable the target network device to perform a registration procedure.

Step S1302: After the registration procedure is completed, send a computing power resource requirement to the target network device, to enable the target network device to generate a native computing power service policy based on the computing power resource requirement and allocate communication resources and computing power resources to the terminal.

Further, the generating, by the target network device, a native computing power service policy based on the computing power resource requirement and allocating communication resources and computing power resources to the terminal includes: generating, by the target network device, a native computing power service policy based on the computing power resource requirement through a policy control function entity, and allocating communication resources and computing power resources to the terminal.

Further, the allocating, by the target network device, communication resources and computing power resources to the terminal includes:
selecting, by the target network device, a computing power service server that meets the computing power resource requirement of the terminal and having a lowest probability of congestion on a transmission path and a matching gateway based on a movement track of the terminal.

Further, the allocating, by the target network device, communication resources and computing power resources to the terminal includes:
updating, by the target network device, a native computing power service policy on a session management entity, to enable the session management entity to trigger a session management procedure, switch a session to an appropriate control plane function, and adjust transmission quality of service of the terminal.

Further, the native computing power service policy includes: an address or an identifier of a computing power service server, a gateway address or a gateway identifier, and transmission quality of service.

Step S1303: Receive the native computing power service policy sent by the target network device.

Step S 1304: Obtain the native computing power service provided by the target network device.

The steps S1301 to 1304 can implement the method embodiment of steps S701 to 706 in FIG. 7, and can achieve the same technical effect. To avoid repetition, details are not described herein again.

Therefore, in a native computing power service implementation method provided in embodiments of this application, the CSCF negotiates required computing power resources with the terminal and allocates communication resources and computing power resources to the terminal, to provide the terminal with a native computing power service that meets a computing power resource requirement of the terminal.

It should be noted that in a native computing power service implementation method provided in embodiments of this application, an execution body may be a native computing power service implementation apparatus, or a control module configured to perform the native computing power service implementation method in the native computing power service implementation apparatus. In embodiments of this application, an example in which the native computing power service implementation apparatus performs the native computing power service implementation method is used to describe the native computing power service implementation apparatus provided in embodiments of this application.

FIG. 14 is a schematic diagram of another structure of a native computing power service implementation apparatus according to embodiments of this application. As shown in FIG. 14, the apparatus includes: a transceiver module 1401 and a service execution module 1402.

The transceiver module 1401 is configured to perform signaling communication of a native computing power service with a target network device through a control plane; and the service execution module 1402 is configured to obtain a native computing power service that meets a computing power resource requirement.

Further, the target network device is a computing service control function entity CSCF.

Further, the transceiver module 1401 is configured to:
perform signaling communication of a native computing power service with a target network device through a computing service layer, where the computing service layer of the native computing power service implementation apparatus is an upper layer of a non-access stratum, and signaling of the native computing power service is encapsulated in signaling of the non-access stratum.

Further, signaling of the native computing power service is forwarded by an execution entity configured to implement an access and mobility management function.

Therefore, in a native computing power service implementation method provided in embodiments of this application, signaling communication of a native computing power service is performed with a terminal through a control plane, and the terminal is provided with a native computing power service that meets a computing power resource requirement of the terminal, so that an operator can implement and monitor a native computing power service, and both a communication requirement and a computing power requirement of a UE are satisfied.

Further, based on the foregoing embodiments, the transceiver module 1401 is configured to:
send a registration request message for a native computing power service to a target network device, to enable the target network device to perform a registration procedure.

Further, the transceiver module 1401 is further configured to:
send a message for subscribing to a registration event notification to the target network device.

Further, in a case of roaming, the transceiver module 1401 is configured to:
send a registration request message for a native computing power service to the target network device through a proxy target network device, where signaling of a native computing power service between the proxy target network device and the transceiver module 1401 is forwarded by an execution entity configured to implement an access and mobility management function.

Therefore, in a native computing power service implementation method provided in embodiments of this application, through a preset registration procedure, a terminal registers a native computing power service, so that the terminal can implement the native computing power service on an operator network, and both a communication requirement and a computing power requirement of a UE are satisfied.

Further, the transceiver module 1401 is further configured to:
after the registration procedure is completed, send a computing power resource requirement to the target network device, to enable the target network device to generate a native computing power service policy based on the computing power resource requirement and allocate communication resources and computing power resources to the native computing power service implementation apparatus; and
receive the native computing power service policy sent by the target network device.

Further, the generating, by the target network device, a native computing power service policy based on the computing power resource requirement includes:
generating, by the target network device, a native computing power service policy based on the computing power resource requirement through a policy control function entity, and allocating communication resources and computing power resources to the native computing power service implementation apparatus.

Further, the allocating communication resources and computing power resources to the native computing power service implementation apparatus includes:
selecting, by the target network device, a computing power service server that meets the computing power resource requirement of the native computing power service implementation apparatus and having a lowest probability of congestion on a transmission path and a matching gateway based on a movement track of the native computing power service implementation apparatus.

Further, the allocating communication resources and computing power resources to the native computing power service implementation apparatus includes:
updating, by the target network device, a native computing power service policy on a session management entity, to enable the session management entity to trigger a session management procedure, switch a session to an appropriate control plane function, and adjust transmission quality of service of the native computing power service implementation apparatus.

Further, the native computing power service policy includes: an address or an identifier of a computing power service server, a gateway address or a gateway identifier, and transmission quality of service.

Therefore, in a native computing power service implementation method provided in embodiments of this application, the CSCF negotiates required computing power resources with the terminal and allocates communication resources and computing power resources to the terminal, to provide the terminal with a native computing power service that meets a computing power resource requirement of the terminal.

The native computing power service implementation apparatus in embodiments of this application may be an apparatus, or may be a component, an integrated circuit, or a chip in a terminal. The apparatus may be a mobile terminal or may be a non-mobile terminal. For example, the mobile terminal may include, but is not limited to, the types of the terminal 11 listed above, and the non-mobile terminal may be a server, a network attached storage (Network Attached Storage, NAS), a personal computer (personal computer, PC), a television (television, TV), a teller machine, or a self-service machine, which is not specifically limited in embodiments of this application.

The native computing power service implementation apparatus in embodiments of this application may be an apparatus having an operating system. The operating system may be Android (Android) operating system, an iOS operating system, or another possible operating system, which is not specifically limited in embodiments of this application.

The native computing power service implementation apparatus provided in embodiments of this application can implement all processes implemented in the method embodiments of FIG. 11 to FIG. 13, and achieve the same technical effect. To avoid repetition, details are not described herein again.

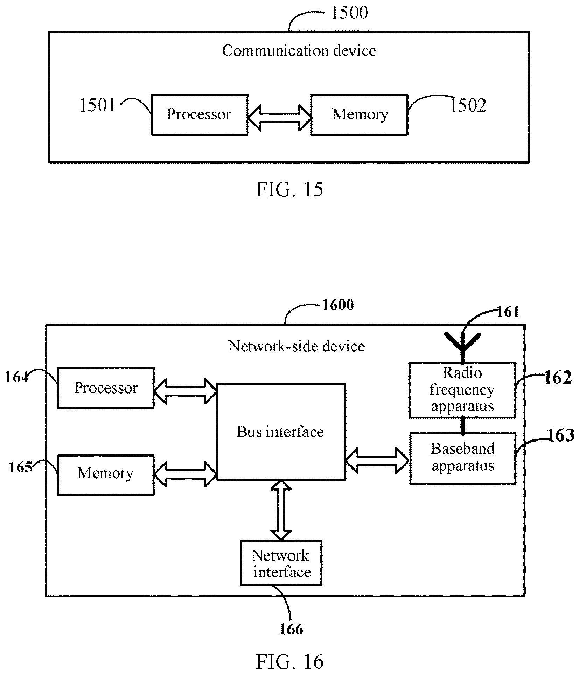

Optionally, as shown in FIG. 15, embodiments of this application further provide a communication device 1500, including a processor 1501, a memory 1502, and a program or an instruction stored in the memory 1502 and executable on the processor 1501. For example, when the communication device 1500 is a terminal, the program or the instruction, when executed by the processor 1501, implements all processes of the foregoing native computing power service implementation method embodiments, and can achieve the same technical effect. When the communication device 1500 is a network device, the program or the instruction, when executed by the processor 1501, implements all processes of the foregoing native computing power service implementation method embodiments, and can achieve the same technical effect. To avoid repetition, details are not described herein again.

Specifically, embodiments of this application further provide a network device. As shown in FIG. 16, the network device 1600 includes: an antenna 161, a radio frequency apparatus 162, and a baseband apparatus 163. The antenna 161 is connected to the radio frequency apparatus 162. In an uplink direction, the radio frequency apparatus 162 receives information by using the antenna 161, and sends the received information to the baseband apparatus 163 for processing. In a downlink direction, the baseband apparatus 163 processes information to be sent, and sends the information to the radio frequency apparatus 162. The radio frequency apparatus 162 processes the received information and then sends the information out by using the antenna 161.

The foregoing frequency band processing apparatus may be located in the baseband apparatus 163, and the method performed by the network device in the above embodiments may be implemented in the baseband apparatus 163, where the baseband apparatus 163 includes a processor 164 and a memory 165.

The baseband apparatus 163 may include, for example, at least one baseband board. A plurality of chips are disposed on the baseband board. As shown in FIG. 16, one of the plurality of chips is, for example, the processor 164, and is connected to the memory 165, to invoke a program in the memory 165 to perform operations of the network device in the foregoing method embodiments.

The baseband apparatus 163 may further include a network interface 166, configured to exchange information with the radio frequency apparatus 162. The interface is, for example, a common public radio interface (common public radio interface, CPRI for short).

Specifically, the network device in this embodiment of this application further includes: an instruction or a program stored in the memory 165 and executable on the processor 164. The processor 164 invokes the instruction or program in the memory 165 to perform the method performed by the modules shown in FIG. 14, and the same technical effect is achieved. To avoid repetition, details are not described herein again.

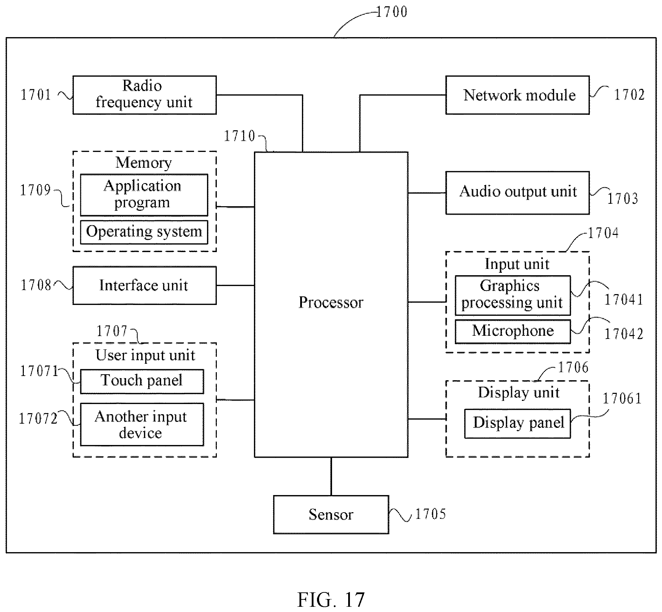

FIG. 17 is a schematic diagram of a hardware structure of a terminal according to embodiments of this application.

The terminal 1700 includes but is not limited to: components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art may understand that the terminal 1700 further includes a power supply (such as a battery) for supplying power to the components. The power supply may logically connect to the processor 1710 by using a power supply management system, thereby implementing functions, such as charging, discharging, and power consumption management, by using the power supply management system. A terminal structure shown in FIG. 17 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1704 may include a graphics processing unit (Graphics Processing Unit, GPU) 17041 and a microphone 17042. The graphics processing unit 17041 performs processing on image data of a static picture or a video that is obtained by an image acquisition apparatus (for example, a camera) in a video acquisition mode or an image acquisition mode. The display unit 1706 may include a display panel 17061, for example, the display panel 17061 may be configured in a form such as a liquid crystal display or an organic light-emitting diode. The user input unit 1707 includes a touch panel 17071 and another input device 17072. The touch panel 17071 is also referred to as a touch screen. The touch panel 17071 may include two parts: a touch detection apparatus and a touch controller. The another input device 17072 may include, but is not limited to, a physical keyboard, a functional key (such as a volume control key or a switch key), a track ball, a mouse, and a joystick, and details are not described herein again.

In this embodiment of this application, the radio frequency unit 1701 receives downlink data from a network device and transmits the downlink data to the processor 1710 for processing. In addition, uplink data is transmitted to the network device. Generally, the radio frequency unit 1701 includes, but is not limited to, an antenna, at least one amplifier, a transceiver, a coupler, a low noise amplifier, a duplexer, and the like.

The memory 1709 may be configured to store a software program or instruction and various data. The memory 1709 may mainly include a program or instruction storage region and a data storage region. The program or instruction storage region may store an operating system, an application program or instruction required by at least one function (for example, a sound playback function and an image playback function), or the like. The memory 1709 may include a high speed random access memory, and may also include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash memory device, or other non-volatile solid-state storage devices.

The processor 1710 may include one or more processing units. Optionally, an application processor and a modem processor may be integrated into the processor 1710. The application processor mainly processes an operating system, a user interface, an application program or instruction, and the like. The modem processor mainly processes wireless communication, and is, for example, a baseband processor. It may be understood that the modem processor may alternatively not be integrated into the processor 1710.

The radio frequency unit 1701 is configured to perform signaling communication of a native computing power service with a target network device through a control plane.

The processor 1710 is configured to obtain a native computing power service that meets a computing power resource requirement.

Further, the target network device is a computing service control function entity.

Further, the radio frequency unit 1701 is configured to perform signaling communication of a native computing power service with a target network device through a computing service layer, where the computing service layer of the terminal is an upper layer of a non-access stratum, and signaling of the native computing power service is encapsulated in signaling of the non-access stratum.

Further, signaling of the native computing power service is forwarded by an execution entity configured to implement an access and mobility management function.

Therefore, an operator can implement and monitor a native computing power service, and both a communication requirement and a computing power requirement of a UE are satisfied.

Further, the radio frequency unit 1701 is configured to send a registration request message for a native computing power service to a target network device, to enable the target network device to perform a registration procedure.

Further, the radio frequency unit 1701 is further configured to send a message for subscribing to a registration event notification to the target network device.

Further, in a case of roaming, the unit 1701 is configured to send a registration request message for a native computing power service to the target network device through a proxy target network device, where signaling of a native computing power service between the proxy target network device and the terminal is forwarded by an execution entity configured to implement an access and mobility management function.

Therefore, a terminal can implement a native computing power service on an operator network, and both a communication requirement and a computing power requirement of a UE are satisfied.

The performing signaling communication of a native computing power service with a target network device through a control plane further includes:

Further, the radio frequency unit 1701 is further configured to, after the registration procedure is completed, send a computing power resource requirement to the target network device, to enable the target network device to generate a native computing power service policy based on the computing power resource requirement and allocate communication resources and computing power resources to the terminal; and
receive the native computing power service policy sent by the target network device.

Further, the generating, by the target network device, a native computing power service policy based on the computing power resource requirement includes:
generating, by the target network device, a native computing power service policy based on the computing power resource requirement through a policy control function entity, and allocating communication resources and computing power resources to the terminal.

Further, the allocating, by the target network device, communication resources and computing power resources to the terminal includes:
selecting, by the target network device, a computing power service server that meets the computing power resource requirement of the terminal and having a lowest probability of congestion on a transmission path and a matching gateway based on a movement track of the terminal.

Further, the allocating, by the target network device, communication resources and computing power resources to the terminal includes:
updating, by the target network device, a native computing power service policy on a session management entity, to enable the session management entity to trigger a session management procedure, switch a session to an appropriate control plane function, and adjust transmission quality of service of the terminal.

Further, the native computing power service policy includes: an address or an identifier of a computing power service server, a gateway address or a gateway identifier, and transmission quality of service.

The terminal is provided with a native computing power service that meets a computing power resource requirement of the terminal.

Embodiments of this application further provide a readable storage medium, storing a program or an instruction. The program or instruction, when executed by a processor, implements all processes of the foregoing native computing power service implementation method embodiments, and can achieve the same technical effect. To avoid repetition, details are not described herein again.

The processor is a processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

Embodiments of this application further provide a chip, including: a processor and a communication interface, where the communication interface is coupled to the processor, and the processor is configured to run a program or an instruction of a network device, to implement all processes of the foregoing native computing power service implementation method embodiments, and can achieve the same technical effect. To avoid repetition, details are not described herein again.

It should be understood that, the chip described in embodiments of this application may also be referred to as a system-level chip, a system chip, a chip system, a system on chip, or the like.

It should be noted that, in this specification, "include", "comprise", and any variants are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or apparatus. Without more limitations, elements defined by the sentence "including one" does not exclude that there are still other same elements in the processes, methods, objects, or apparatuses. In addition, it should be pointed out that the scope of the methods and apparatuses in embodiments of this application is not limited to performing the functions in the order shown or discussed, but also can include performing the functions in basically the same way or in the opposite order according to the functions involved, for example, the described methods can be performed in a different order from the described ones, and various steps can also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the reflected technologies may be implemented in the form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in embodiments of this application.

Embodiments of this application are described above with reference to the accompanying drawings, but this application is not limited to the foregoing specific embodiments, which are merely illustrative rather than limited. Under the inspiration of this application, a person of ordinary skill in the art may make various variations without departing from the scope of this application and the protection of the claims, and such variations shall fall within the protection of this application.

## Claims

1. A native computing power service implementation method, performed by a target network device, the method comprising:
performing signaling communication of a native computing power service with a terminal through a control plane, and providing the terminal with a native computing power service that meets a computing power resource requirement of the terminal.

2. The method according to claim 1, wherein the performing signaling communication of a native computing power service with a terminal through a control plane comprises:
performing the signaling communication of the native computing power service with the terminal through a computing service layer, wherein the computing service layer of the terminal is an upper layer of a non-access stratum, and signaling of the native computing power service is encapsulated in signaling of the non-access stratum.

3. The method according to claim 1, wherein in a case of providing the terminal with the native computing power service that meets the computing power resource requirement of the terminal, the target network device is configured to implement at least one of following functions on a network protocol transmission platform:
authenticating and authorizing the terminal to access the native computing power service;
negotiating computing power quality of service of the native computing power service;
scheduling of a computing power resource;
routing; and
charging.

4. The method according to claim 1, wherein signaling of the native computing power service between the target network device and the terminal is forwarded by an execution entity configured to implement an access and mobility management function.

5. The method according to claim 4, wherein the signaling of the native computing power service is transparently transmitted between the target network device and the execution entity configured to implement the access and mobility management function through a service message of a service based architecture interface.

6. The method according to claim 1, wherein the performing signaling communication of a native computing power service with a terminal through a control plane comprises:
receiving a registration request message for the native computing power service sent by the terminal; and
performing a registration procedure.

7. The method according to claim 6, wherein the performing a registration procedure comprises:
obtaining authentication information of the terminal from a subscription management function entity, and performing authentication;
in a case that the authentication is successful, obtaining user data of the terminal from the subscription management function entity; and
performing third-party registration with a computing power service server.

8. The method according to claim 7, wherein after the performing third-party registration with a native computing power service server, the method further comprises:
receiving a message for subscribing to a registration event notification from the terminal.

9. The method according to claim 6, wherein in a case that the terminal is roaming, the receiving a registration request message for the native computing power service sent by the terminal comprises:
receiving the registration request message for the native computing power service sent by the terminal through a proxy target network device, wherein signaling of a native computing power service between the proxy target network device and the terminal is forwarded by an execution entity configured to implement an access and mobility management function.

10. The method according to claim 1, wherein the performing signaling communication of a native computing power service with a terminal through a control plane further comprises:
after a registration procedure is completed, obtaining the computing power resource requirement of the terminal;
generating a native computing power service policy based on the computing power resource requirement of the terminal, and allocating communication resources and computing power resources to the terminal; and
sending the native computing power service policy to the terminal.

11. The method according to claim 10, wherein the generating a native computing power service policy based on the computing power resource requirement of the terminal, and allocating communication resources and computing power resources to the terminal comprises:
generating the native computing power service policy based on the computing power resource requirement of the terminal through a policy control function entity, and allocating the communication resources and the computing power resources to the terminal.

12. The method according to claim 10 or 11, wherein the generating a native computing power service policy based on the computing power resource requirement of the terminal comprises:
obtaining first information through an execution entity of a target network function; and
generating the native computing power service policy based on the first information and the computing power resource requirement of the terminal, wherein
the first information comprises second information obtained from a transmission layer and third information obtained from a native computing power layer, wherein
the second information comprises at least one of following: transmission status information on a network side, and location information and a movement track of the terminal; and
the third information comprises at least one of following: computing power resource distribution information of a computing power service server in a network.

13. The method according to claim 10 or 11, wherein the allocating communication resources and computing power resources to the terminal comprises:
selecting, according to a movement track of the terminal, a computing power service server meeting the computing power resource requirement of the terminal and having a lowest probability of congestion on a transmission path and a matching gateway.

14. The method according to claim 10 or 11, wherein the allocating communication resources and computing power resource to the terminal comprises:
updating the native computing power service policy on a session management entity, to enable the session management entity to trigger a session management procedure, switch a session to an appropriate control plane function, and adjust transmission quality of service of the terminal.

15. The method according to claim 14, wherein in a case that the terminal performs the native computing power service, the method further comprises:
obtaining first information through an execution entity of a target network function;
determining whether a control plane session meets the computing power resource requirement of the terminal based on the first information; and
in a case that the control plane session does not meet the native computing power resource requirement of the terminal, updating the native computing power service policy, and adjusting the communication resources and the computing power resources allocated to the terminal.

16. The method according to claim 15, wherein the updating the native computing power service policy, and adjusting the communication resources and the computing power resources allocated to the terminal comprises:
updating the native computing power service policy through the policy control function entity, and adjusting the communication resources and the computing power resources allocated to the terminal.

17. The method according to claim 12, wherein the execution entity of the target network function is a network data analytics function entity, or another function entity configured to perform information collection and analysis or network status collection and analysis.

18. The method according to claim 10, wherein the native computing power service policy comprises: an address or an identifier of a computing power service server, a gateway address or a gateway identifier, and transmission quality of service.

19. The method according to claim 1, wherein in a case that the terminal performs the native computing power service, the method further comprises:
performing communication with a computing power service server, to collect charging information related to the native computing power service; and
sending the charging information related to the native computing power service of the terminal to a charging entity, to enable the charging entity to obtain, according to the charging information related to the native computing power service of the terminal and charging information generated by transmission, a charging data record list.

20. The method according to claim 19, wherein the charging information comprises at least one of following:
a type of a computing service;
a computing amount;
a computing duration;
an amount of computing power resources used; and
a duration of using computing power resources.

21. The method according to claim 1, wherein the target network device is a computing service control function entity.

22. A native computing power service implementation apparatus, comprising:
a communication module, configured to perform signaling communication of a native computing power service with a terminal through a control plane; and
a service providing module, configured to provide the terminal with a native computing power service that meets a computing power resource requirement of the terminal.

23. A native computing power service implementation method, performed by a terminal, the method comprising:
performing signaling communication of a native computing power service with a target network device through a control plane, to obtain a native computing power service that meets a computing power resource requirement.

24. The method according to claim 23, wherein the performing signaling communication of a native computing power service with a target network device through a control plane comprises:
performing the signaling communication of the native computing power service with the target network device through a computing service layer, wherein the computing service layer of the terminal is an upper layer of a non-access stratum, and signaling of the native computing power service is encapsulated in signaling of the non-access stratum.

25. The method according to claim 23, wherein signaling of the native computing power service between the target network device and the terminal is forwarded by an execution entity configured to implement an access and mobility management function.

26. The method according to claim 23, wherein the performing signaling communication of a native computing power service with a target network device through a control plane comprises:
sending a registration request message for a native computing power service to the target network device, to enable the target network device to perform a registration procedure.

27. The method according to claim 26, wherein after the sending a registration request message for a native computing power service to the target network device, to enable the target network device to perform a registration procedure, the method further comprises:
sending a message for subscribing to a registration event notification to the target network device.

28. The method according to claim 26, wherein in a case of roaming, the sending a registration request message for a native computing power service to the target network device comprises:
sending the registration request message for the native computing power service to the target network device through a proxy target network device, wherein signaling of a native computing power service between the proxy target network device and the terminal is forwarded by an execution entity configured to implement an access and mobility management function.

29. The method according to claim 23, wherein the performing signaling communication of a native computing power service with a target network device through a control plane further comprises:
after a registration procedure is completed, sending the computing power resource requirement to the target network device, to enable the target network device to generate a native computing power service policy based on the computing power resource requirement and allocate communication resources and computing power resources to the terminal; and
receiving the native computing power service policy sent by the target network device.

30. The method according to claim 29, wherein the generating, by the target network device, a native computing power service policy based on the computing power resource requirement comprises:
generating, by the target network device, the native computing power service policy based on the computing power resource requirement through a policy control function entity, and allocating the communication resources and the computing power resources to the terminal.

31. The method according to claim 29 or 30, wherein the allocating, by the target network device, communication resources and computing power resources to the terminal comprises:
selecting, by the target network device, a computing power service server meeting the computing power resource requirement of the terminal and having a lowest probability of congestion on a transmission path and a matching gateway based on a movement track of the terminal.

32. The method according to claim 29 or 30, wherein the allocating, by the target network device, communication resources and computing power resources to the terminal comprises:
updating, by the target network device, the native computing power service policy on a session management entity, to enable the session management entity to trigger a session management procedure, switch a session to an appropriate control plane function, and adjust transmission quality of service of the terminal.

33. The method according to claim 29, wherein the native computing power service policy comprises: an address or an identifier of a computing power service server, a gateway address or a gateway identifier, and transmission quality of service.

34. The method according to claim 23, wherein the target network device is a computing service control function entity.

35. A native computing power service implementation apparatus, comprising:
a transceiver module, configured to perform signaling communication of a native computing power service with a target network device through a control plane; and
a service execution module, configured to obtain a native computing power service that meets a computing power resource requirement.

36. A network device, comprising a processor, a memory, and a program or an instruction stored in the memory and executable on the processor, wherein when the program or the instruction is executed by the processor, steps of the native computing power service implementation method according to any one of claims 1 to 21 are implemented.

37. A terminal, comprising a processor, a memory, and a program or an instruction stored in the memory and executable on the processor, wherein when the program or the instruction is executed by the processor, steps of the native computing power service implementation method according to any one of claims 23 to 34 are implemented.

38. A readable storage medium, storing a program or an instruction, wherein when the program or the instruction is executed by a processor, steps of the native computing power service implementation method according to any one of claims 1 to 21 are implemented or steps of the native computing power service implementation method according to any one of claims 23 to 34 are implemented.
